# EUROPÄISCHE PATENTANMELDUNG

(11) **EP 2 251 558 A1**
(43) Veröffentlichungstag der Anmeldung: **17.11.2010**
(21) Anmeldenummer: 09006395.9
(22) Anmeldetag: 12.05.2009
(51) Int. Cl.: F16D 1/095

(54) **Verfahren zur Montage einer mechanischen Schrumpfscheibe**

(71) Anmelder: Ringfeder Power-Transmission GmbH, 47807 Krefeld (DE)
(72) Erfinder: Moka, Thomas, 63322 Rödermark (DE); Peter, Rainer, 47877 Willich Neersen (DE); Niessen, Manfred, 64823 Groß-Umstadt (DE)
(74) Vertreter: Stark, Jens Christian

(57) **Zusammenfassung**

Die Erfindung betrifft ein Verfahren zur Montage einer mechanischen Schrumpfscheibe auf einer Welle oder dergleichen, wobei die Schrumpfscheibe einen Innenring und zumindest einen Außenring umfasst und die Schrumpfscheibe zunächst hydraulisch vorgespannt wird und anschließend in gespanntem Zustand fixiert wird, indem bei Schrumpfscheiben mit lediglich einem Außenring eine Verschraubung zwischen dem einen Außenring und dem Innenring erfolgt und bei Schrumpfscheiben mit zwei Außenringen eine Verschraubung zwischen den beiden Außenringen erfolgt.

Um eine einfache sowie verbesserte Montage einer mechanischen Schrumpfscheibe auf einer Welle oder dergleichen zu ermöglichen, soll das Vorspannen mittels mehrerer, insbesondere kreisringsegmentförmig ausgebildeter, Spannelemente erfolgen, wobei sämtliche Spannelemente zunächst an der Schrumpfscheibe angebracht werden, dann ein Vorspannen der Schrumpfscheibe durch sämtliche Spannelemente erfolgt und anschließend die Spannelemente nacheinander entfernt werden, wobei zuerst die Fixierung durch Verschraubung in dem durch ein entferntes Spannelement frei gewordenen Bereich erfolgt, bevor das nächste Spannelement entfernt wird.

## Beschreibung

Die Erfindung betrifft ein Verfahren sowie ein entsprechendes System zur Montage einer mechanischen Schrumpfscheibe auf einer Welle oder dergleichen, wobei die Schrumpfscheibe einen Innenring und zumindest einen Außenring umfasst und die Schrumpfscheibe zunächst hydraulisch vorgespannt wird und anschließend in gespanntem Zustand fixiert wird, indem bei Schrumpfscheiben mit lediglich einem Außenring eine Verschraubung zwischen dem einen Außenring und dem Innenring erfolgt und bei Schrumpfscheiben mit zwei Außenringen eine Verschraubung zwischen den beiden Außenringen erfolgt.

Aus der Praxis sind derartige Verfahren bekannt, bei denen das Vorspannen mittels eines einzigen kreisringförmig ausgebildeten Spannelementes erfolgt. Für die Fixierung durch Verschraubung sind in dem Spannelement entsprechende Aussparungen, beispielsweise in Form ausreichend dimensionierter Durchgangsbohrungen, vorgesehen, durch die die Verschraubung hindurch zunächst an einem Teil der hierfür vorgesehenen Stellen erstellt werden kann.

Nachteilig hierbei ist, dass eine Verschraubung vor Entfernung des Spanelementes nur in begrenztem Umfang erfolgen kann und die Handhabung bei Erstellung dieser ersten Verschraubung durch das Spannelement umständlich und aufwändig ist.

Aufgabe der Erfindung ist es, die vorgenannten Nachteile zu vermeiden und ein Verfahren sowie ein entsprechendes System anzugeben, mit dem die vorgenannten Nachteile vermieden werden und eine einfache sowie verbesserte Montage einer mechanischen Schrumpfscheibe auf einer Welle oder dergleichen ermöglicht wird.

Diese Aufgabe wird dadurch gelöst, dass bei einem gattungsgemäßes Verfahren das Vorspannen mittels mehrerer, insbesondere kreisringsegmentförmig ausgebildeter, Spannelemente erfolgt, wobei sämtliche Spannelemente zunächst an der Schrumpfscheibe angebracht werden, dann ein Vorspannen der Schrumpfscheibe durch sämtliche Spannelemente erfolgt und anschließend die Spannelemente nacheinander entfernt werden, wobei zuerst die Fixierung durch Verschraubung in dem durch ein entferntes Spannelement frei gewordenen Bereich erfolgt, bevor das nächste Spannelement entfernt wird. Hierdurch kann eine Fixierung durch Verschrauben in einem durch ein bereits entferntes Spannelement frei gewordenen Bereich erfolgen, wenngleich die Vorspannung durch die anderen Spannelemente noch weiterhin aufrecht erhalten bleibt.

Vorzugsweise kann ein Zuganker an dem Außenring bzw. einem ersten Außenring befestigt werden, an denen die Spannelemente wiederum zur Aufbringung der Vorspannung angreifen, insbesondere mehrere Zuganker pro Spannelement vorgesehen sind, so dass eine technisch einfache und leicht anbringbare und auch wieder entfernbare Befestigungsmöglichkeit gegeben ist.

Dabei kann je Zuganker ein separates Spannelement vorgesehen sein, es können aber auch Spannelemente für mehrere Zuganker gemeinsam ausgebildet sein.

Erfindungsgemäß können die Zuganker mit Außengewinden versehen sein und in Innengewinde in dem jeweiligen Außenring eingeschraubt werden, so dass keine zusätzlichen Befestigungsmöglichkeiten vorzusehen sind.

Auch können die Spannelemente kreisringsegmentförmig ausgebildet sein und umlaufend der Reihe nach montiert werden.

Vorteilhafterweise kann das Vorspannen zeitgleich durch sämtliche Spannelemente erfolgen, alternativ kann das Vorspannen aber auch nacheinander durch Vorspannen durch einzelner oder einiger Spannelemente erfolgen, entweder in fortlaufender oder aber in beliebiger Reihenfolge.

Die Erfindung betrifft weiterhin ein System zur Montage einer mechanischen Schrumpfscheibe auf einer Welle oder dergleichen, wobei die Schrumpfscheibe einen Innenring und zumindest einen Außenring umfasst, insbesondere zur Durchführung des erfindungsgemäßen Verfahrens.

Dabei kann das System mehrere, insbesondere kreisringsegmentförmig ausgebildete, Spannelemente zur vorübergehenden Anbringung und zur Erzielung der Vorspannung der Schrumpfscheibe umfassen.

Zudem können Zuganker können zur vorübergehenden Anbringung der Spannelemente an dem Außenring bzw. einen ersten Außenring vorgesehen sein, die derart ausgebildet sind, dass die Spannelemente zur Aufbringung der Vorspannung an ihnen angreifen können, insbesondere können mehrere Zuganker pro Spannelement vorgesehen sein.

Darüber hinaus können Bohrungen in dem Außenring bzw. dem ersten Außenring mit Innengewinde versehen sein zum Einschrauben der Zuganker, die hierfür mit Außengewinden versehen sein können.

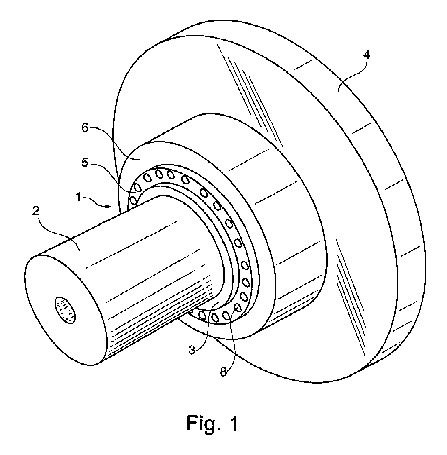

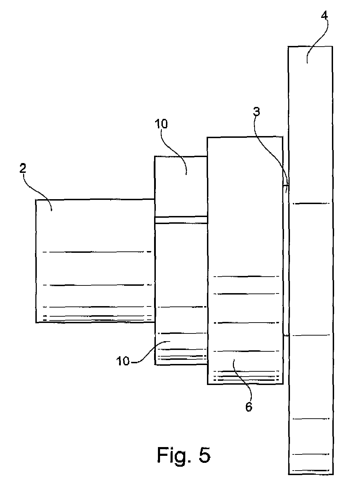

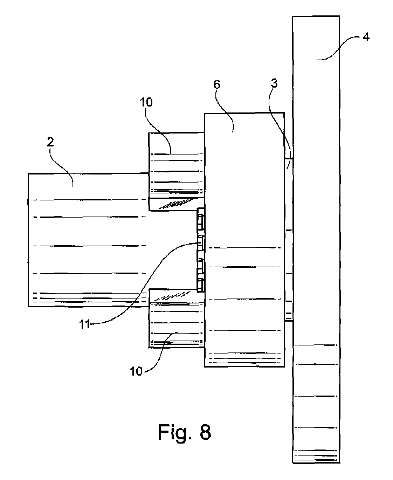

Im Folgenden wird ein in der Zeichnung dargestelltes Ausführungsbeispiel der Erfindung erläutert. Die Figuren 1 bis 9 zeigen verschiedene Ausschnitte aus dem erfindungsgemäßen Verfahren,, durchgeführt mit dem erfindungsgemäße System, teilweise in Seitenansicht und teilweise in perspektivischer Darstellung. In allen Figuren werden für gleiche bzw. gleichartige Bauteile übereinstimmende Bezugszeichen verwendet.

Wie aus Fig. 1 ersichtlich, startet das erfindungsgemäße Verfahren, in dem eine mechanischen Schrumpfscheibe 1 zunächst auf eine auf einer Welle 2 befindlichen Nabe 3 mit einem Flansch 4 aufgesteckt wird.

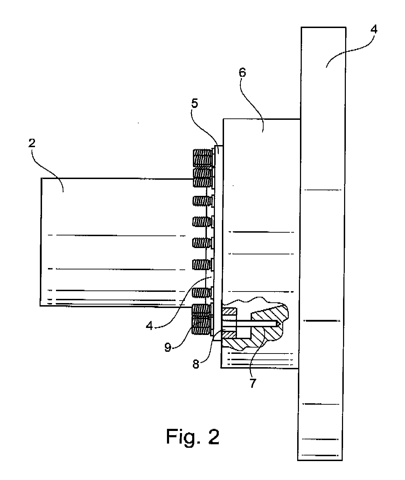

Dabei umfasst die Schrumpfscheibe 1 in üblicher Weise einen Innenring 5 und einen Außenring 6. Der Außenring 6 ist mit Bohrungen 7 versehen (vgl. Fig. 2), die Innengewinde aufweisen, und der Innenring 5 weist entsprechende Durchgangsbohrungen 8 auf.

Gemäß Fig. 2 werden Zuganker 9, die mit Außengewinden versehen sind, durch die Durchgangsbohrungen 8 hindurch in die Bohrungen 7 mit Innengewinde in den Innenring 5 eingeschraubt.

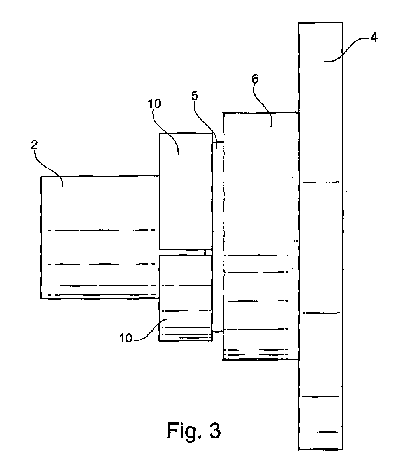

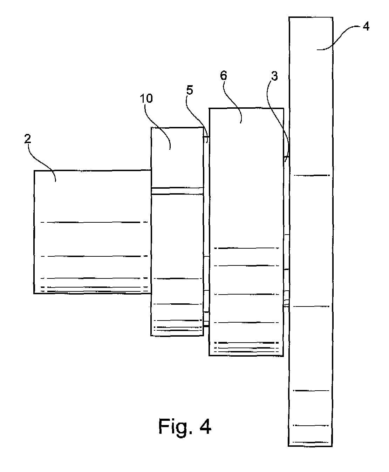

Für das Vorspannen werden mehrere kreisringsegmentförmig ausgebildete Spannelemente zunächst an den Zugankern 9 der Schrumpfscheibe 1 angebracht (Fig. 3), und es erfolgt dann ein Vorspannen der Schrumpfscheibe 1 durch sämtliche Spannelemente 10 (vgl. Fig. 4), wodurch der Außenring von dem Flansch 4 weg gezogen wird.

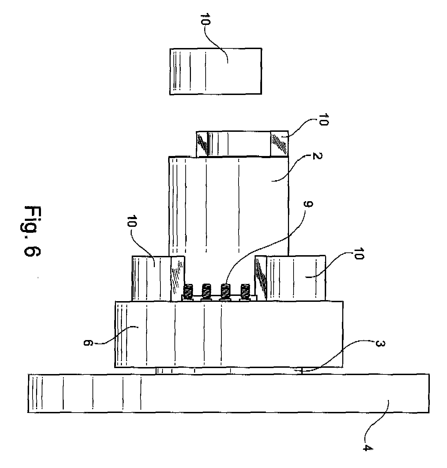

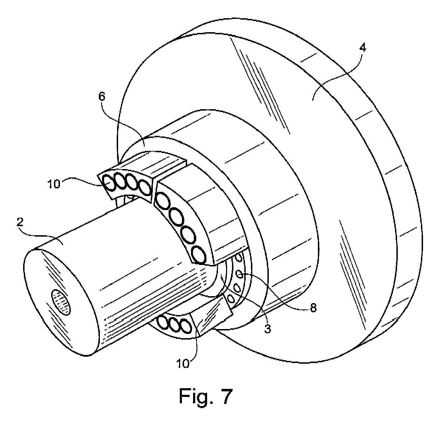

Anschließend werden zwei der sechs Spannelemente 10 sowie die korrespondierenden Zuganker 9 - wie aus den Figuren 6 und 7 ersichtlich - entfernt und in dem durch die entfernten Spannelemente 10 frei gewordenen Bereichen erfolgt eine Fixierung der vorgespannten Situation durch Verschrauben mittels Schrauben 11.

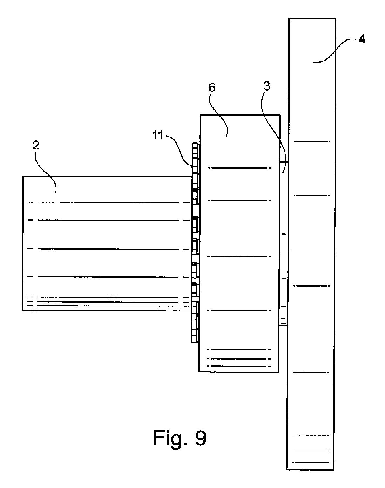

Anschließend werden weitere Spannelemente 10 sowie die korrespondierenden Zuganker 9 entfernt und entsprechend Schrauben 11 eingesetzt, bis sämtliche Spannelemente entfernt sind und eine vollständige Verschraubung (vgl. Fig. 9) gegeben ist.

## Patentansprüche

1. Verfahren zur Montage einer mechanischen Schrumpfscheibe (1) auf einer Welle (2) oder dergleichen, wobei die Schrumpfscheibe (1) einen Innenring (5) und zumindest einen Außenring (6) umfasst und die Schrumpfscheibe (1) zunächst hydraulisch vorgespannt wird und anschließend in gespanntem Zustand fixiert wird, indem bei Schrumpfscheiben (1) mit lediglich einem Außenring (6) eine Verschraubung zwischen dem einen Außenring (6) und dem Innenring (5) erfolgt und bei Schrumpfscheiben (1) mit zwei Außenringen (6) eine Verschraubung zwischen den beiden Außenringen (6) erfolgt, **dadurch gekennzeichnet, dass** das Vorspannen mittels mehrerer, insbesondere kreisringsegmentförmig ausgebildeter, Spannelemente (10) erfolgt, wobei sämtliche Spannelemente (10) zunächst an der Schrumpfscheibe (1) angebracht werden, dann ein Vorspannen der Schrumpfscheibe (1) durch sämtliche Spannelemente (10) erfolgt und anschließend die Spannelemente (10) nacheinander entfernt werden, wobei zuerst die Fixierung durch Verschraubung in dem durch ein entferntes Spannelement (10) frei gewordenen Bereich erfolgt, bevor das nächste Spannelement (10) entfernt wird.

2. Verfahren nach dem vorhergehenden Anspruch, **dadurch gekennzeichnet, dass** Zuganker (9) an dem Außenring (6) bzw. einem ersten Außenring (6) befestigt werden, an denen die Spannelemente (10) wiederum zur Aufbringung der Vorspannung angreifen.

3. Verfahren nach dem vorhergehenden Anspruch, **dadurch gekennzeichnet, dass** die Zuganker (9) mit Außengewinden versehen sind und in Innengewinde in dem Außenring (6) bzw. dem ersten Außenring (6) eingeschraubt werden.

4. Verfahren nach einem der vorhergehenden Ansprüche, **dadurch gekennzeichnet, dass** die Spannelemente (10) kreisringsegmentförmig ausgebildet sind und umlaufend der Reihe nach montiert werden.

5. Verfahren nach einem der vorhergehenden Ansprüche, **dadurch gekennzeichnet, dass** das Vorspannen zeitgleich durch sämtliche Spannelemente (10) erfolgt.

6. System zur Montage einer mechanischen Schrumpfscheibe (1) auf einer Welle (2) oder dergleichen, wobei die Schrumpfscheibe (1) einen Innenring (5) und zumindest einen Außenring (6) umfasst, insbesondere zur Durchführung des Verfahrens nach einem der vorhergehenden Ansprüche, **dadurch gekennzeichnet, dass** das System mehrere, insbesondere kreisringsegmentförmig ausgebildete, Spannelemente (10) zur vorübergehenden Anbringung und zur Erzielung der Vorspannung der Schrumpfscheibe (1) umfasst.

7. System nach dem vorhergehenden Anspruch, **dadurch gekennzeichnet, dass** Zuganker (9) zur vorübergehenden Anbringung der Spannelemente (10) an dem Außenring (6) bzw. dem ersten Außenring (6) vorgesehen sind, die derart ausgebildet sind, dass die Spannelemente (10) zur Aufbringung der Vorspannung an ihnen angreifen können.

8. System nach dem vorhergehenden Anspruch, **dadurch gekennzeichnet, dass** Bohrungen (7) in dem Außenring (6) mit Innengewinde versehen sind zum Einschrauben der Zuganker (9), die hierfür mit Außengewinden versehen sind.
